# EUROPEAN PATENT APPLICATION

(11) **EP 4 765 400 A1**
(43) Date of publication of application: **24.06.2026**
(21) Application number: 24910557.8
(22) Date of filing: 03.12.2024
(51) Int. Cl.: H01M 50/244, H01M 50/242

(54) **BATTERY FRAME AND BATTERY PACK**

(30) Priority: 31.07.2024 CN 202421846971 U; 31.07.2024 CN 202411045649
(71) Applicant: Eve Energy Storage Co., Ltd, Wuhan, Hubei 430000 (CN)
(72) Inventor: LI, Long, Wuhan, Hubei 430000 (CN); CHEN, Menghan, Wuhan, Hubei 430000 (CN); YI, Haohao, Wuhan, Hubei 430000 (CN)
(74) Representative: Herrero & Asociados, S.L.
(86) International application number: PCT/CN2024/136273
(87) International publication number: WO 2025/139625

(57) **Abstract**

A battery frame and a battery pack. The battery frame includes two X-direction side plates (110), two Y-direction side plates (120) and a cover plate (140). The Y-direction side plate includes a lateral plate (121) and a vertical plate (122) erected on the lateral plate (121). The lateral plate (121) and the vertical plate (122) are of an integrated structure. The two Y-direction side plates (120) are oppositely arranged along a direction Y and are connected via the lateral plates (121). The lateral plates (121) is provided with a plurality of first coolant channels (1211) arranged at intervals in the direction Y. The two X-direction side plates (110) are oppositely arranged along a direction X. Two ends of each Y-direction side plate along the direction X are respectively connected to the two X-direction side plates. The two Y-direction side plates (120) and the two X-direction side plates (110) are enclosed to form a frame structure (100) with an opening at one end. The cover plate (140) covers the opening of the frame structure.

## Description

The present disclosure claims priority to Chinese Patent Application No. 202411045649.5, filed with the Chinese Patent Office on July 31, 2024, and Chinese Patent Application No. 202421846971.3, filed with the Chinese Patent Office on July 31, 2024, the disclosures of which are incorporated herein by reference in their entireties.

### TECHNICAL FIELD

The present disclosure relates to the technical field of energy storage batteries, and for example, to a battery frame and a battery pack.

### BACKGROUND

With the rapid development of the new energy vehicle market, power batteries, as the core component of new energy vehicles, performance and safety of the power batteries have become important factors for determining vehicle performance and market competitiveness. The battery pack serves as a key component for carrying and protecting the power batteries, and the strength of a frame structure of the battery pack directly affects the safety performance of the battery and the service life of the entire vehicle.

An accommodating space inside the battery pack can accommodate multiple battery modules. The battery modules come in the following two forms: 1) The battery module adopts a battery module form, that is, the battery module has end plates and side plates, the end plates or the side plates are installed on mounting beams inside the battery pack, which results in a complex structure of the entire battery pack, and the height of the mounting beams is usually less than 30 mm. Therefore, the mounting beams contribute little to the overall stiffness of the battery pack; 2) The battery module adopts a module-less design, and cells of the battery module are fixed on a battery frame by means of bottom adhesive.

### TECHNICAL PROBLEM

When the size of the battery pack is large, both of the above structures of the battery pack are difficult to meet requirements on stiffness and mode.

### TECHNICAL SOLUTION

According to a first aspect, the present disclosure provides a battery frame, which includes:
two Y-direction side plates; where each of the Y-direction side plates comprises a lateral plate and a vertical plate erected on the lateral plate; wherein the lateral plate and the vertical plate of each of the Y-direction side plates are of an integrated structure; the two Y-direction side plates are oppositely arranged along a direction Y and are connected via the lateral plates; the lateral plates is provided with a plurality of first coolant channels arranged at intervals in the direction Y;
two X-direction side plates oppositely arranged along a direction X; wherein two ends of each of the Y-direction side plates along the direction X are respectively connected to the two X-direction side plates; the two Y-direction side plates and the two X-direction side plates are enclosed to form a frame structure with an opening at one end; and
a cover plate covering the opening of the frame structure;
wherein the direction Y and the direction X are perpendicular to each other.

According to a second aspect, the present disclosure further provides a battery pack, which includes:
a battery module comprising a plurality of battery groups stacked along the direction Y; wherein each of the battery groups comprises at least two cells arranged at intervals along the direction X; wherein a thickness direction of the cell is parallel to the direction Y;
the battery frame as described above; wherein the battery module is arranged in the battery frame, and a large surface of the cell faces the vertical plate 122 of the Y-direction side plate of the battery frame.

In some embodiments, a thermal insulation buffer member is arranged between every two adjacent battery groups along the direction Y.

### BENEFICIAL EFFECTS

The battery frame provided by the present disclosure is provided with the Y-direction side plate having the lateral plate and the vertical plate that are integrally formed, allowing the expansion force generated when the battery module expands after long-term use to act on the vertical plates of the Y-direction side plates. The lateral plate can apply a force onto the vertical plate towards an interior of the battery frame, thereby enhancing the ability of the vertical plate to resist deformation, thereby enabling the battery frame to meet requirements of the battery pack on stiffness and mode, so as to be suitable for carrying large-size battery modules. By providing the first coolant channels on the lateral plate, the battery module can be cooled and dissipated. Compared with traditional battery frames, this design is equivalent to integrating a water-cooling plate on the Y-direction side plate on one hand, in this way, the Y-direction side plate can also cool and dissipate the battery module while implementing a function of carrying the battery module. On the other hand, the types and the number of components can be reduced, thereby reducing processing costs.. The battery frame has a simple structure and can reduce the materials used for structural components. The connection surfaces for connecting the X-direction side plate, the Y-direction side plate and the cover plate are reduced, thereby reducing the processing costs.

The present disclosure also provides the battery pack, by applying the described battery frame, the overall stiffness and mode of the battery pack can be improved.

### BRIEF DESCRIPTION OF THE DRAWINGS

FIG. 1 is a schematic structural diagram of a battery pack according to some implementations of the present disclosure with a cover plate and some battery modules hidden;
FIG. 2 is an exploded schematic structural diagram of a battery module according to some implementations of the present disclosure;
FIG. 3 is a schematic structural diagram of a battery frame according to some implementations of the present disclosure;
FIG. 4 is an exploded schematic structural diagram of a battery frame according to some implementations of the present disclosure;
FIG. 5 is an enlarged partial view at position A shown in FIG. 4;
FIG. 6 is a schematic structural diagram of a X-direction side plate according to some implementations of the present disclosure from one perspective;
FIG. 7 is a schematic structural diagram of a X-direction side plate according to some implementations of the present disclosure from another perspective;
FIG. 8 is an enlarged partial view at position B shown in FIG. 3;
FIG. 9 is a schematic structural diagram of a Y-direction side plate according to some implementations of the present disclosure;
FIG. 10 is a schematic structural diagram of a bottom plate according to some implementations of the present disclosure;
FIG. 11 is an enlarged partial view at position C shown in FIG. 10;
FIG. 12 is a schematic diagram of a partial structure of a battery frame according to some implementations of the present disclosure.

In the drawings:
100, battery frame; 110, X-direction side plate; 111, first extension plate; 112, second extension plate; 113, third extension plate;120, Y-direction side plate; 121, lateral plate; 1211, first coolant channel; 1212, connection slot; 122, vertical plate; 1221, clearance portion; 130, bottom plate; 131, connection protrusion; 132, second coolant channel; 140, cover plate;
200, battery module; 210, battery group; 211, cell;
310, side reinforcement plate; 320, end reinforcement plate;
400, anti-collision buffer member.

### DETAILED DESCRIPTION

Embodiments of the present disclosure provide a battery frame and a battery pack with high structural strength, suitable for carrying large-size battery modules, capable of improving the overall stiffness and mode of the battery pack, and reducing processing cost.

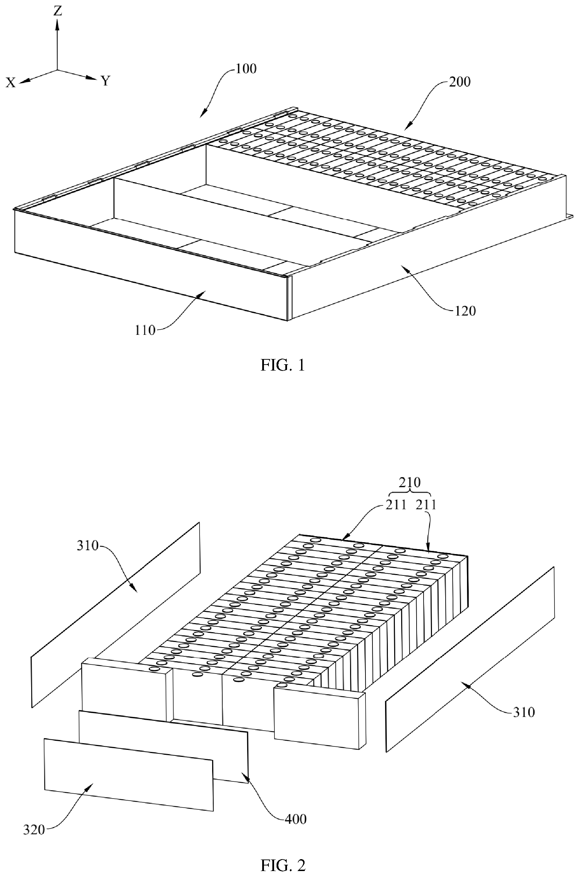

FIG. 1 shows a schematic structural diagram of a battery pack provided in this embodiment with a cover plate and some battery modules hidden. As shown in FIG. 1, the embodiment provides a battery pack. The battery pack includes a battery frame 100 and a battery module 200. The battery module 200 is arranged in the battery frame 100. The battery frame 100 serves to carry and protect the battery module 200. Optionally, there are a plurality of battery modules 200. The plurality of battery modules 200 are arranged at intervals along a direction X and arranged in the battery frame 100, so as to improve the battery capacity, voltage, load, safety, and stability of the battery pack.

FIG. 2 shows an exploded schematic structural diagram of a battery module 200 provided in this embodiment. As shown in FIG. 2 and combined with FIG. 1, in this embodiment, the battery module 200 includes a plurality of battery groups 210 stacked along a direction Y. Each of the battery groups 210 includes at least two cells 211 arranged at intervals along the direction X. Compared with traditional battery modules in the form of battery modules, the battery module 200 in this embodiment can omit the arrangement of end plates and steel strips. When the battery module 200 is placed into the battery frame 100, on the one hand, the distance of the thickness of multiple side plates when the battery module is arranged can be reduced, making the width smaller when the same number of battery modules are packed, thereby improving the space utilization and the energy density of the entire pack. On the other hand, the expansion force of the battery module 200 can directly act on the battery frame 100. Compared with a traditional design manner in which the expansion force of the battery module is concentrated on end plates or steel strips, the interaction area between the battery module 200 and the battery frame 100 is larger, and the strength of the end plates or steel strips themselves is much lower than that of the entire battery frame 100. Therefore, the battery frame 100 has better stiffness and resistance to expansion force.

The direction X specifically refers to a width direction of the cell 211, the direction Y specifically refers to a thickness direction of the cell 211, and a direction Z specifically refers to a height direction of the cell 211. The direction X, the direction Y, and the Zdirection are mutually perpendicular to each other. In each battery module 200, an outward facing surface of the cells 211 in the two battery groups 210 located at the ends of the battery module 200 is a large surface of the cell. When the battery pack is in operation, the expansion force generated by the battery module 200 is the greatest in the direction Y (i.e. the direction perpendicular to the large surface of the cell).

Optionally, a thermal insulation buffer member is provided between two adjacent battery groups 210. The thermal insulation buffer member is configured to reduce a phenomenon that thermal runaway of the cell 211 spreads to the entire battery module 200 due to an excessively high temperature, and can also avoid adverse effects on the performance of the battery pack due to an excessive expansion force of the battery module 200. Optionally, a thickness of the thermal insulation buffer member is in a range of 3 mm~5 mm. For example, the thickness of the thermal insulation buffer member may be 3.2 mm, 3.4 mm, 3.5 mm, 3.8 mm, 4.0 mm, 4.2 mm, 4.5 mm, 4.6 mm, 4.8 mm, etc.

In this embodiment, a width of the thermal insulation buffer member is equal to the sum of the widths of all the cells 211 in each of the battery groups 210. This design enables the thermal insulation buffer member to completely cover the large surfaces of all cells 211 in each battery group 210, achieving the best thermal insulation buffer effect. Optionally, both sides of the thermal insulation buffer member are respectively adhered to the corresponding battery groups 210, which is convenient to operate and firmly connected.

Optionally, two adjacent cells 211 in each battery group 210 are connected by using a double-sided adhesive or glue, which is simple and convenient and is connected firmly. In this embodiment, three battery modules 200 are provided in the battery frame 100, and each battery group 210 in each battery module 200 includes two cells 211. The number of the battery modules 200 provided in the battery frame 100 and the number of the cells 211 in the battery group 210 can be adjusted by a designer according to actual production needs. However, as the size of the battery module 200 increases, it is difficult for the battery frame 100 in related technologies to meet requirements of the battery pack on stiffness and mode.

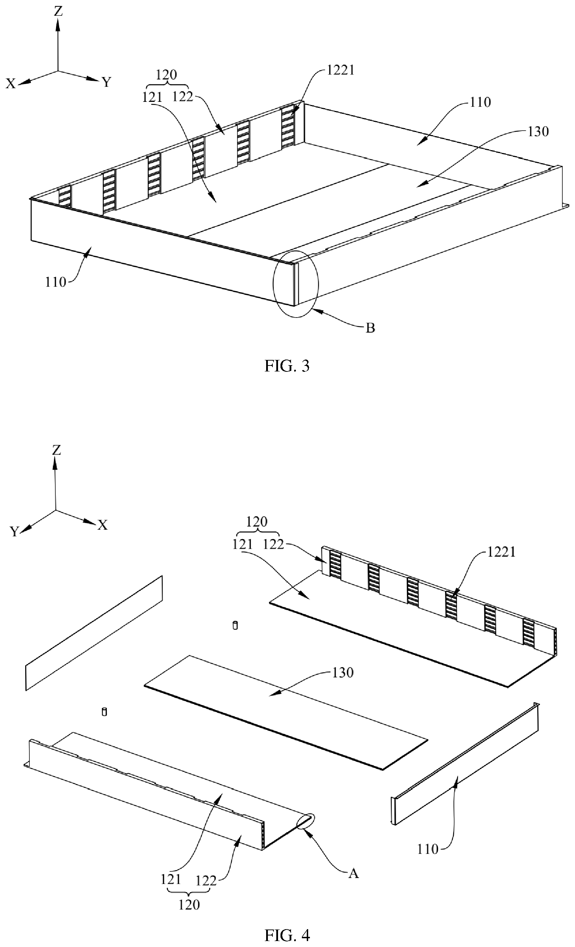

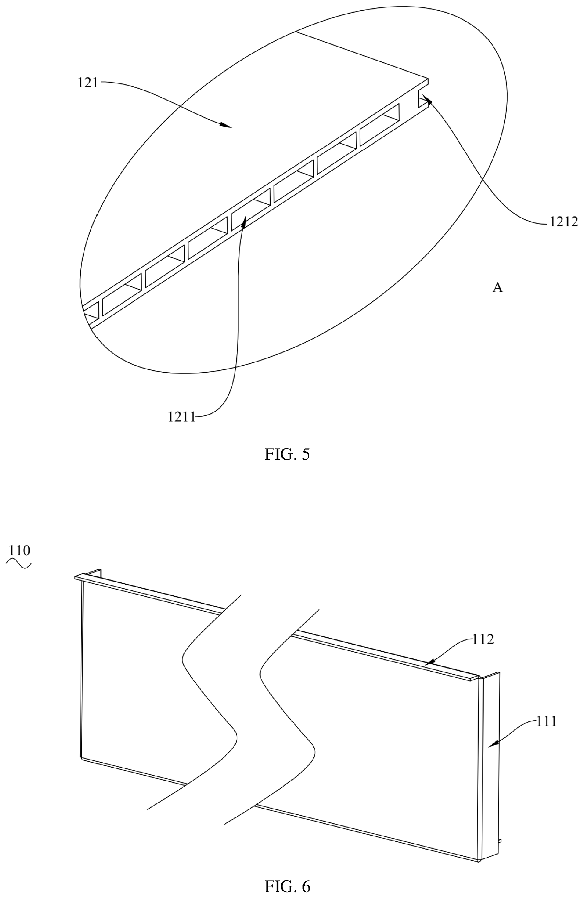

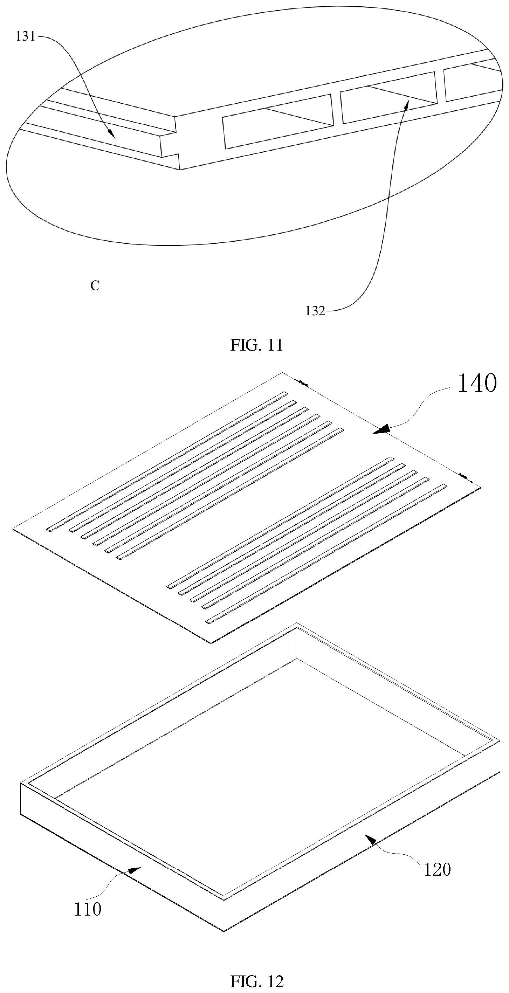

FIG. 3 shows a schematic structural diagram of the battery frame 100 provided in this embodiment. FIG. 4 shows an exploded schematic structural diagram of the battery frame 100 provided in this embodiment. FIG. 5 shows an enlarged partial view at position A shown in FIG. 4. FIG. 12 shows a schematic diagram of a partial structure of the battery frame provided in this embodiment. As shown in FIGs. 3 to 5, and combined with FIGs. 1 and 12, this embodiment further provides a battery frame 100 which includes two X-direction side plates 110, two Y-direction side plates 120, and a cover plate 140. Each Y-direction side plate 120 includes a lateral plate 121 and a vertical plate 122 erected on the lateral plate 121. The lateral plate 121 and the vertical plate 122 of each Y-direction side plate 120 are of an integrated structure. The two Y-direction side plates 120 are oppositely arranged along the direction Y, and are connected via the lateral plates 121. The lateral plate 121 is provided with a plurality of first coolant channels 1211 arranged at intervals in the direction Y. The two X-direction side plates 110 are oppositely arranged along the direction X. Two ends of each Y-direction side plate 120 along the direction X are respectively connected to the two X-direction side plates 110. The two Y-direction side plates 120 and the two X-direction side plates 110 are enclosed to form a frame structure with an opening at one end. The cover plate 140 covers the opening of the frame structure, and the large surfaces of the cells 211 face the vertical plate 122 of the Y-direction side plate 120. In this embodiment, the X-direction side plate 110, the Y-direction side plate 120, and the cover plate 140 are enclosed to form the frame structure with an internal cavity and an open top. The battery module 200 is accommodated within the internal cavity of the battery frame 100. When the battery module 200 is assembled into the battery frame 100, the large surface of the cells directly face the vertical plate 122 of the Y-direction side plate 120. That is, the Y-direction side plates 120 are the main parts that bear the expansion force of the battery module 200.

The battery frame 100 provided by this embodiment is provided with the Y-direction side plate 120 having the lateral plate 121 and the vertical plate 122 that are integrally formed, allowing the expansion force generated when the battery module 200 expands after long-term use to act on the vertical plates 122 of the Y-direction side plates 120. The lateral plate 121 can apply a force onto the vertical plate 122 towards an interior of the battery frame 100, thereby enhancing the ability of the vertical plate 122 to resist deformation, thereby enabling the battery frame 100 to meet requirements of the battery pack on stiffness and mode, so as to be suitable for carrying large-size battery modules 200. By providing the first coolant channels 1211 on the lateral plate 121, the battery module 200 can be cooled and dissipated. Compared with traditional battery frames, this design is equivalent to integrating a water-cooling plate on the Y-direction side plate 120 on one hand, in this way, the Y-direction side plate 120 can also cool and dissipate the battery module 200 while implementing a function of carrying the battery module 200. On the other hand, the types and the number of components can be reduced, thereby reducing processing costs.. The battery frame 100 has a simple structure and can reduce the materials used for structural components. The connection surfaces for connecting the X-direction side plate 110, the Y-direction side plate 120 and the cover plate 140 are reduced, thereby reducing the processing costs.

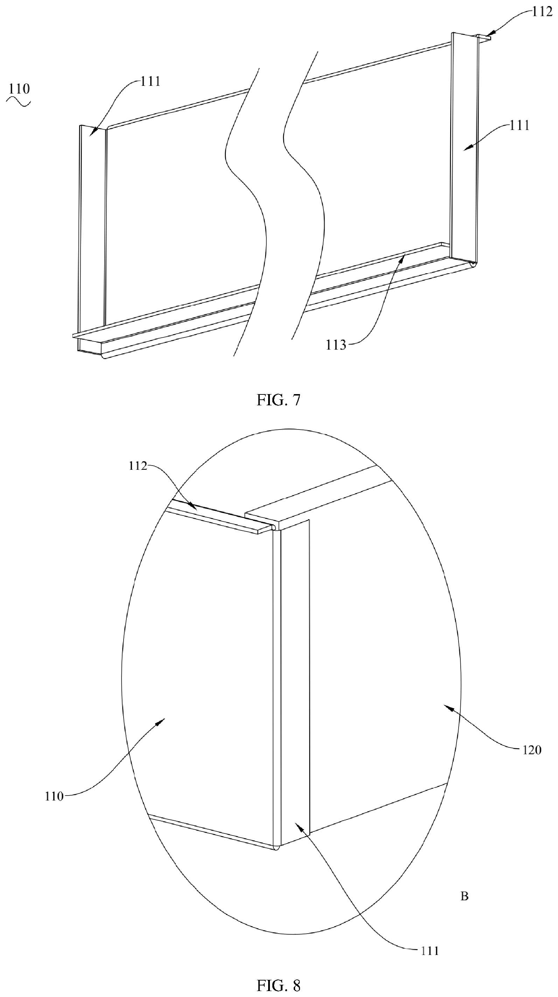

FIG. 6 shows a schematic structural diagram of the X-direction side plate 110 provided in this embodiment from one perspective. FIG. 7 shows a schematic structural diagram of the X-direction side plate 110 provided in this embodiment from another perspective. FIG. 8 shows an enlarged partial view at position B shown in FIG. 3. As shown in FIGs. 6 to 8 and combined with FIG. 3, two ends of the X-direction side plate 110 in the direction Y are both provided with a first extension plate 111 extending inwards along the direction X. The first extension plate 111 is partially attached and connected to the vertical plate 122 at a corresponding side. By providing the first extension plate 111, the contact area between the X-direction side plate 110 and the vertical plate 122 can be increased, and the connection strength between the two can be improved, thereby enhancing the structural strength of the entire battery frame 100 to a certain extent. In this embodiment, the first extension plate 111 and the corresponding vertical plate 122 are connected by means of welding, that is, the X-direction side plate 110 and the Y-direction side plate 120 are connected by edge welding, so that the connection is stable and the structural strength is high. With this design, the Y-direction side plate 120 can also be structurally pre-fastened by the X-direction side plate 110, and the X-direction side plate 110 can provide support and protection for the Y-direction side plate 120, so that when the battery module 200 expands during operation, the X-direction side plate 110 can share some of the expansion force, thereby reducing compression deformation of the Y-direction side plate 120 caused by the expansion of the battery module 200, and enhancing the structural strength of the battery frame 100.

Optionally, a top of the X-direction side plate 110 is provided with a second extension plate 112 extending outwards along the direction X. The second extension plate 112 is partially attached and connected to the cover plate 140. This design can increase the contact area between the X-direction side plate 110 and the cover plate 140, improve the connection strength between the the two, and enhance the structural strength of the entire battery frame 100 to a certain extent. In this embodiment, the cover plate 140 and the second extension plate 112, as well as the cover plate 140 and the Y-direction side plate 120, are pre-fastened by connecting bolts. The cover plate 140 cooperates with the X-direction side plate 110 to support and protect the Y-direction side plate 120, so that when the battery module 200 expands during operation, the cover plate 140 can share the expansion force of the battery module 200 in a direction Z, thereby reducing compression deformation of the Y-direction side plate 120 caused by the expansion of the battery module 200, and enhancing the structural strength of the battery frame 100.

Optionally, a bottom of the X-direction side plate 110 is provided with a third extension plate 113 extending inward along the direction X. The third extension plate 113 is partially attached and connected to the lateral plate 121 at a corresponding side. This design can increase the contact area between the X-direction side plate 110 and the lateral plate 121, improve the connection strength between the two, and thus enhance the structural strength of the entire battery frame 100 to a certain extent. In this embodiment, the third extension plate 113 may be connected with the lateral plate 121 by welding. In other embodiments, the third extension plate 113 may be connected with the lateral plate 121 by bolts.

An inner side of the X-direction side plate 110 refers to a side of the X-direction side plate 110 facing the battery module 200, that is, a side of the X-direction side plate 110 facing the internal cavity of the battery frame 100. An outer side of the X-direction side plate 110 refers to a side of the X-direction side plate 110 facing away from the battery module 200, that is, a side of the X-direction side plate 110 facing away from the internal cavity of the battery frame 100.

In this embodiment, the Y-direction side plate 120 is made of aluminum pfofile. Optionally, the Y-direction side plate 120 is made of a 6-series aluminum profiles. Compared with other series of aluminum profiles, the 6-series aluminum profile has advantages of high strength, light weight, and easy processing.

In some embodiments, the X-direction side plate 110 is made of 6-series aluminum profiles to enhance the structural strength of the X-direction side plate 110. In other embodiments, the X-direction side plate 110 may also be formed by bending sheet metal members. As the expansion force of the battery module 200 mostly acts on the Y-direction side plate 120 when it expands, therefore, the X-direction side plate 110 formed by bending sheet metal members can also meet the requirements of the battery frame 100 on stiffness and mode. When preparing the X-direction side plate 110, an aluminum die-casting or sheet metal bending reinforcement structures are arranged at the corners of the main body of the X-direction side plate 110, the first extension plate 111, the second extension plate 112 and the third extension plate 113, so as to reduce the use of structural components such as sealing nails. Compared with the battery frames in the related technologies, the battery frame 100 has fewer connection surfaces among the X-direction side plate 110, the Y-direction side plate 120 and the cover plate 140, thereby saving processing costs to a certain extent.

Optionally, a thickness of the X-direction side plate 110 is in a range of 2 mm~3.5 mm, and a thickness of the Y-direction side plate 120 is in a range of 2 mm~3.5 mm. For example, the thickness of the X-direction side plate 110 may be 2.1mm, 2.3mm, 2.5mm, 2.8mm, 3.0mm, 3.2mm, 3.4mm, etc. The thickness of the Y-direction side plate 120 may be 2.1mm, 2.3mm, 2.5mm, 2.8mm, 3.0mm, 3.2mm, 3.4mm, etc. In this embodiment, the thickness of each of the X-direction side plate 110 and the Y-direction side plate 120 may be selected as 2.5 mm. Considering that the expansion force of the battery module 200 on the Y-direction side plate 120 is relatively larger, the thickness of the Y-direction side plate 120 may also be set to be greater than the thickness of the X-direction side plate 110. A designer can adjust the thicknesses of the two according to actual needs to ensure the structural strength of the entire battery frame 100.

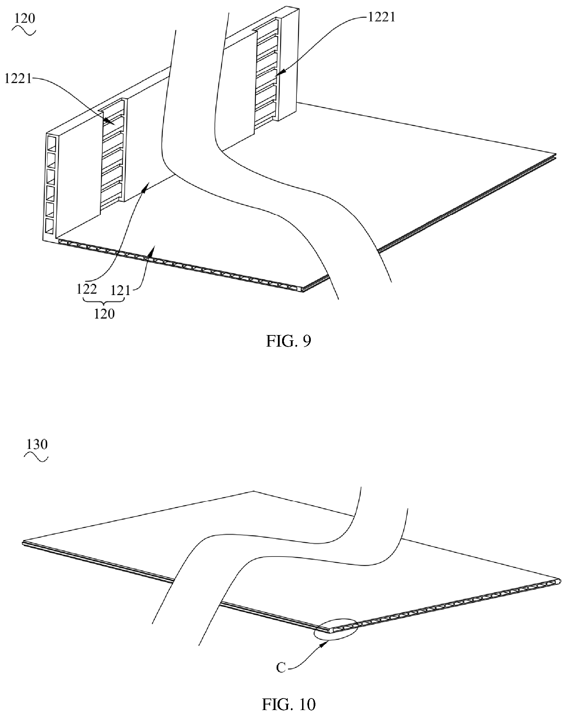

FIG. 9 shows a schematic structural diagram of the Y-direction side plate 120 provided in this embodiment. As shown in FIG. 9 and combined with FIG. 5, in this embodiment, the Y-direction side plate 120 is made of 6-series aluminum profiles through an extrusion process, with the first coolant channel 1211 being formed on the Y-direction side plate 120. Compared with 1-series aluminum expansion water-cooled plate or stamping brazed integrated water-cooled plate in related technologies, the Y-direction side plate 120 has greatly improved strength and stiffness.

Optionally, as shown in FIG. 9, the vertical plate 122 is provided with a clearance portion 1221. When placing the battery module 200 in the battery frame 100, the battery module 200 is typically grasped using a carrying mechanism and transferred into the internal cavity of the battery frame 100. By providing the clearance portion 1221 on the vertical plate 122, a carrying end of the carrying mechanism can be avoided to smoothly transfer the battery module 200 to the inside of the battery frame 100, avoiding interference between the carrying end of the carrying mechanism and the vertical plate 122. In this embodiment, there are a plurality of the clearance portions 1221 on each vertical plate 122, and the plurality of the clearance portions 1221 are distributed at intervals along a length direction (the direction X) of the vertical plate 122. In some embodiments, the designer can adjust the number and the distribution of the clearance portions 1221 on the vertical plate 122 according to the length of the battery module 200 and the number and distribution of the carrying ends of the carrying mechanism. In this embodiment, the clearance portion 1221 is a clearance groove defined on the vertical plate 122, which is simple in structure and easy to process.

FIG. 10 shows a schematic structural diagram of the bottom plate 130 provided in this embodiment. FIG. 11 shows an enlarged partial view at position C shown in FIG. 10. As shown in FIGs. 10 to 11 and combined with FIGs. 4 to 5, the battery frame 100 further includes a bottom plate 130 arranged between the two Y-direction side plates 120. Each side edge of the bottom plate 130 is connected to the lateral plate 121 and the X-direction side plate 110 at a corresponding side. In some embodiments, each side edge of the bottom plate 130 is connected to the lateral plate 121 or the second lateral plate 110 at a corresponding side. On the one hand, when a size of the lateral plate 121 of the Y-direction side plate 120 in the direction Y is constant, the arrangement of the bottom plate 130 can increase a size of the entire battery frame 100 in the direction Y to be suitable for carrying large-sized battery modules 200. On the other hand, when the size of the battery frame 100 in the direction Y is constant, the arrangement of the bottom plate 130 can reduce the size of the lateral plate 121 of the Y-direction side plate 120 in the direction Y, thereby facilitating the processing of the Y-direction side plate 120.

Optionally, the bottom plate 130 is provided with a plurality of second coolant channels 132 arranged at intervals in the direction Y. That is, the bottom plate 130 is also integrated with a water-cooled plate, and the second coolant channel 132 cooperates with the first coolant channel 1211 to achieve cooling and heat dissipation of the battery modules 200.

In this embodiment, the number of the bottom plate 130 is one, and two sides of the bottom plate 130 arranged at intervals in the direction Y are respectively connected to the corresponding two lateral plates 121. In other embodiments, the number of the bottom plates 130 can be set to multiple. Multiple bottom plates 130 are sequentially connected along the direction Y, and two of the bottom plates 130 located at two ends are respectively connected to the lateral plates 121 at corresponding sides. By arranging multiple bottom plates 130, when assembling the battery pack, designers can select an appropriate number of the bottom plates 130 to assemble with the X-direction side plate 110 and the Y-direction side plate 120 according to the size of the battery modules 200 along the direction Y, making the size of the battery frame 100 be compatible with the size of the battery modules 200, so that the battery frame 100 can be suitable for carrying battery modules 200 of different sizes, thereby achieving modular design of the battery frame 100, and reducing processing and design costs.

In order to achieve a stable connection between the bottom plate 130 and the lateral plate 121, as shown in FIGs. 5 and 11, in this embodiment, the lateral plate 121 is provided with a connection slot 1212, and the bottom plate 130 is provided with a connection protrusion 131 snap-fitted with the connection slot 1212, so as to achieve a stable connection between the lateral plate 121 and the bottom plate 130, and the connection manner is simple and quick. In other embodiments, the connection protrusion 131 can be arranged on the lateral board 121 while the connection slot 1212 can be arranged on the bottom board 130, which can also achieve the above effect. When the number of the bottom plate 130 is at least two, two adjacent bottom plates 130 are also connected with each other in a snap-fitting manner, and the connection manner thereof is the same as that between the bottom plate 130 and the lateral plate 121.

Continuing as shown in FIGs. 1 to 4, a bottom of the battery module 200 is connected to the lateral plate 121 by a thermal conductive structural adhesive; the bottom of the battery module 200 is connected to the bottom sheet 130 through a thermal conductive structural adhesive. The thermal conductive structural adhesive has a certain shear strength, and can cooperate with the lateral plate 121 and the bottom plate 130 to control the deformation of an overall direction Z of the battery module 200. In addition, the thermal conductive structural adhesive has good thermal conductivity, and can also assist the second coolant channel 132 and the first coolant channel 1211 together to achieve cooling and heat dissipation of the battery module 200.

Optionally, the battery pack provided in this embodiment further includes a side reinforcement plate 310, which is provided between the battery module 200 located at the end and the X-direction side plate 110, as well as between two adjacent battery modules 200. The arrangement of the side reinforcement plates 310 can improve an overall mode of the battery module 200, and can avoid the phenomenon that the overall mechanical strength of the battery module 200 decreases due to the aging of the thermal conductive structural adhesive between the bottom of the battery module 200 and the lateral plate 121, s well as between the bottom of the battery module 200 and the bottom plate 130. Optionally, the side reinforcement plate 310 is adhered to the side of the battery module 200.

In a first embodiment, the side reinforcement plate 310 may be an epoxy plate, which is adhered to the side of the battery module 200 by epoxy resin adhesive. In this example, a thickness of the side reinforcement plate 310 is in a range of 0.2 mm~1 mm. For example, the thickness of the side reinforcement plates 310 may be 0.3 mm, 0.4 mm, 0.5 mm, 0.6 mm, 0.7 mm, 0.8 mm, 0.9 mm, etc.

In a second embodiment, the side reinforcement plate 310 may be a fiberglass reinforced epoxy plate, which is adhered to the side of the battery module 200 by epoxy resin adhesive or polyurethane adhesive. In this example, the thickness of the side reinforcement plates 310 is in a range of 0.2 mm~0.5 mm. For example, the thickness of the side reinforcement plates 310 may be 0.25 mm, 0.3 mm, 0.35 mm, 0.4 mm, 0.45 mm, etc.

In a third embodiment, the side reinforcement plate 310 may be an aluminum plate, which is adhered to the side of the battery module 200 by epoxy resin adhesive, polyurethane adhesive, or double-sided adhesive. In this example, the thickness of the side reinforcement plates 310 is in a range of 1 mm~2 mm. For example, the thickness of the side reinforcement plates 310 may be 1.1 mm, 1.2 mm, 1.3 mm, 1.4 mm, 1.5 mm, 1.6 mm, 1.7 mm, 1.8 mm, 1.9 mm, etc.

Optionally, an anti-collision buffer member 400 is arranged between two ends of the battery module 200 and the vertical plate 122 at corresponding sides. The anti-collision buffer member 400 is configured to reduce an impact strength between the battery module 200 and the battery frame 100 under vibration conditions, improve the anti-collision performance of the battery pack, protect the battery module 200 and also prolong the service life of the battery frame 100. Optionally, the thickness of the anti-collision buffer member 400 is in a range of 0.8 mm~1.2 mm. For example, the thickness of the anti-collision buffer member 400 ranges from 0.8 mm, 1.0 mm, 1.1 mm, etc.

In order to improve the anti-collision capability of the battery pack, in this embodiment, end reinforcement plates 320 are provided at both ends of the battery module 200 along the direction Y. Optionally, the end reinforcement plate 320 is a metal plate, and its thickness is in a range of 2.5 mm~3.5 mm. For example, the thickness of the end reinforcement plate 320 may be 2.6mm, 2.7mm, 2.8mm, 2.9mm, 3.0mm, 3.1mm, 3.2mm, 3.3mm, 3.4mm, etc.

Optionally, insulation components are also arranged between the end reinforcement plate 320 and the anti-collision buffer member 400, so as to achieve an insulation connection between the battery frame 100 and the battery module 200, ensuring the use safety of the entire battery pack. In this embodiment, the insulation component is made of polycarbonate (PC) materials, and has a thickness in a range of 0.1mm~0.8mm. For example, the thickness of the insulation component may be 0.2 mm, 0.3 mm, 0.4 mm, 0.5 mm, 0.6 mm, 0.7 mm, etc.

The battery frame 100 provided in this embodiment greatly improves its structural strength by means of the L-shaped structure arrangement, the selection of the material, and the selection of the connection process of the Y-direction side plate 120, enabling the battery frame 100 to meet the requirements of a large-size battery pack on the stiffness and the mode. Through simulation and practical verification, the battery frame 100 is applicable to battery packs with a size of 1.8 m * 2.1 m.

## Claims

1. A battery frame, comprising:
two Y-direction side plates (120); wherein each of the Y-direction side plates (120) comprises a lateral plate (121) and a vertical plate (122) erected on the lateral plate (121); wherein the lateral plate (121) and the vertical plate (122) of each of the Y-direction side plates (120) are of an integrated structure; the two Y-direction side plates (120) are oppositely arranged along a direction Y and are connected via the lateral plates (121); the lateral plates (121) is provided with a plurality of first coolant channels (1211) arranged at intervals in the direction Y;
two X-direction side plates (110) oppositely arranged along a direction X; wherein two ends of each of the Y-direction side plates (120) along the direction X are respectively connected to the two X-direction side plates (110); the two Y-direction side plates (120) and the two X-direction side plates (110) are enclosed to form a frame structure (100) with an opening at one end; and
a cover plate (140) covering the opening of the frame structure (100);
wherein the direction Y and the direction X are perpendicular to each other.

2. The battery frame of claim 1, further comprising at least one of:
two ends of each of the X-direction side plates (110) in the direction Y are both provided with a first extension plate (111) extending inwards along the direction X; wherein the first extension plate (111) is partially attached and connected to the vertical plate (122) at a corresponding side;
a top of each of the X-direction side plates (110) is provided with a second extension plate (112) extending outwards along the direction X; wherein the second extension plate (112) is partially attached and connected to the cover plate (140);
a bottom of each of the X-direction side plates (110) is provided with a third extension plate (113) extending inwards along the direction X; wherein the third extension plate (113) is partially attached and connected to the lateral plate (121) at a corresponding side.

3. The battery frame according to claim 1, further comprising at least one of the following: a thickness of the X-direction side plate (110) is in a range of 2 mm~3.5 mm; a thickness of the Y-direction side plate (120) is in a range of 2 mm~3.5mm.

4. The battery frame according to claim 1, wherein the vertical plate (122) is provided with a clearance portion (1221).

5. The battery frame according to any one of claims 1-4, wherein the battery frame further comprises a bottom plate (130) arranged between the two Y-direction side plates (120), wherein each side edge of the bottom plate (130) is connected to the lateral plate (121) or the X-direction side plate (110) at a corresponding side.

6. The battery frame according to claim 5, wherein the bottom plate (130) is provided with a plurality of second coolant channels (132) arranged at intervals in the direction Y.

7. The battery frame according to claim 5, wherein one of the bottom plate (130) and the lateral plate (121) is provided with a connection slot (1212), and the other one of the bottom plate (130) and the lateral plate (121) is provided with a connection protrusion (131) snap-fitted with the connection slot (1212).

8. The battery frame according to claim 5, wherein the number of the bottom plates (130) is multiple; wherein multiple bottom plates (130) are sequentially connected along the direction Y; two of the bottom plates (130) located at two ends are respectively connected to the lateral plates (121) at corresponding sides.

9. A battery pack, comprising:
a battery module (200) comprising a plurality of battery groups (210) stacked along the direction Y; wherein each of the battery groups (210) comprises at least two cells (211) arranged at intervals along the direction X; wherein a thickness direction of the cell (211) is parallel to the direction Y;
the battery frame of any one of claims 1 to 8; wherein the battery module (200) is arranged in the battery frame, and a large surface of the cell (211) faces the vertical plate (122) of the Y-direction side plate (120) of the battery frame.

10. The battery pack according to claim 9, whereina thermal insulation buffer member is provided between two adjacent battery groups (210) along the direction Y.

11. The battery pack according to claim 10, further comprising at least one of:
a thickness of the thermal insulation buffer member is in a range of 3 mm~5 mm;
a width of the thermal insulation buffer member is equal to the sum of the widths of all the cells (211) in each of the battery groups (210).

12. The battery pack according to claim 9, wherein a bottom of the battery module (200) is connected to the lateral plate (121) by a thermal conductive structural adhesive.

13. The battery pack according to claim 9, wherein anti-collision buffer members (400) are provided between two ends of the battery module (200) in the direction Y and the vertical plates (122) at corresponding sides.

14. The battery pack according to claim 13, wherein a thickness of the anti-collision buffer member (400) is in a range of 0.8 mm~1.2 mm.

15. The battery pack according to claim 13, wherein an end reinforcement plate (320) is provided between the anti-collision buffer member (400) and the vertical plate (122).

16. The battery pack according to claim 15, wherein a thickness of the end reinforcement plate (320) is in a range of 2.5mm~3.5mm.

17. The battery pack according to claim 9, wherein direction Xthe battery pack further comprises a side reinforcement plate (310); wherein the side reinforcement plate (310) is arranged between the battery module (200) located at an end and the X-direction side plate (110), as well as between two adjacent battery modules (200).

18. The battery pack according to claim 17, wherein a thickness of the side reinforcement plate (310) is in a range of 0.2 mm~2 mm.
